Europäisches Patentamt

(19) European Patent Office

Office européen des brevets

(11) Numéro de publication: **0 259 214**
**A1**

## (12) DEMANDE DE BREVET EUROPEEN

(21) Numéro de dépôt: **87401895.5**

(22) Date de dépôt: **18.08.87**

(51) Int. Cl.⁴: **B 29 C 51/34**

(30) Priorité: **18.08.86 FR 8611803**

(43) Date de publication de la demande:
**09.03.88 Bulletin 88/10**

(84) Etats contractants désignés:
**BE CH DE ES GB IT LI LU NL SE**

(71) Demandeur: **MONOPLAST S.A.**
**14, Avenue du Maréchal Leclerc**
**F-40140 Soustons (FR)**

(72) Inventeur: **Aranjo, Damien**
**10, Allée des Moineaux**
**F-40130 Cap Breton (FR)**

(74) Mandataire: **Viard, Jean**
**Cabinet VIARD 28 bis, avenue Mozart**
**F-75016 Paris (FR)**

(54) **Dispositif de fabrication de récipients à fond surélevé par thermoformage et récipients ainsi obtenus.**

(57) Selon l'invention, le fond (3) est embouti par un piston (8) entouré par une bague extensible radialement (12) à double came.

Applications : fabrication de récipients sans interstice à leur partie inférieure entre le fond et la paroi latérale.

FIG.2

EP 0 259 214 A1

## Description

Procédé et dispositif de thermoformage d'un récipient à usage alimentaire à fond embouti.

La présente invention a pour objet un procédé et un dispositif de fabrication par thermoformage de matières thermoplastiques de récipients destinés en particulier, mais non exclusivement, à recevoir des produits alimentaires, ainsi que les récipients obtenus selon ce procédé.

La propriété principale des matières synthétiques thermoplastiques est de pouvoir passer par une élévation de leur température d'un état solide ou cristallisé à un état pâteux et même liquide, la matière reprenant par refroidissement une forme définitive rigide. On a utilisé depuis très longtemps cette propriété des matières thermoplastiques pour constituer des corps creux et plus précisément des emballages ou récipients. Cette utilisation s'est effectuée selon deux grands procédés désignés d'une manière générale par "injection" et par "thermoformage".

Dans le procédé d'injection, on introduit la matière à l'état fondu sous pression à l'intérieur d'un moule pouvant comprendre une ou plusieurs empreintes. L'avantage du procédé d'injection est qu'il permet d'obtenir des objets de forme compliquée avec contre-dépouille. Par contre, ce procédé est coûteux dans la mesure où la matière plastique doit être introduite dans le moule avec une viscosité parfaitement définie, ce qui conduit à des tolérances très étroites, non seulement sur la température, mais également sur la constitution de cette matière. Par ailleurs, les moules d'une grande précision sont d'un prix de revient très élevé et s'usent rapidement compte-tenu notamment des chocs thermiques auxquels ils sont soumis. Enfin, la cadence de production par injection est inférieure à la cadence obtenue par thermoformage.

Dans le thermoformage, la matière plastique n'est pas fondue, mais elle est simplement portée à l'état pâteux par une élévation de température moindre que dans l'injection, et déformée par des moyens mécaniques et/ou pneumatiques. Ce procédé nécessite donc moins d'énergie que l'injection et les machines pour la mise en oeuvre de celui-ci sont plus simples, plus rapides, et moins coûteuses que les presses d'injection.

En ce qui concerne les récipients destinés à recevoir des produits alimentaires, qu'il s'agisse de produits laitiers ou de produits de charcuterie, les industries alimentaires exigent que le récipient présente un fond rentrant, c'est-à-dire que le fond soit surélevé par rapport à la partie inférieure de la paroi latérale du récipient. Cette disposition assure, entre autre, une plus grande rigidité au niveau de la partie inférieure du récipient.

Dans le procédé de thermoformage, après chauffage de la matière, le pot ou récipient est conformé par un piston principal qui forme la cavité, le fond occupant une position extérieure développée par rapport à la paroi latérale du récipient, puis à l'aide d'un second piston ou piston secondaire, le fond est repoussé à l'intérieure. Etant donné que le corps du récipient présente une dépouille destinée à permettre l'extraction facile du piston principal, le piston secondaire ne peut être que cylindrique avec une légère dépouille. Il en résulte qu'il existe un interstice qui est par exemple de l'ordre de 1,4 mm, entre le fond embouti et la paroi latérale du récipient. Il s'est avéré qu'au cours du remplissage d'un tel récipient, l'interstice formé entre le fond embouti et la paroi latérale n'était pas rempli par le produit de remplissage, que cet air conduisait à une oxydation du produit et favorisait le développement des bactéries.

Par ailleurs, dans le cas de récipients présentant une dépouille de l'ordre de 4 degrés environ permettant l'empilage des récipients vides, il est nécessaire de prévoir une collerette ou bourrelet d'empilage faisant saillie latéralement à la surface supérieure du pot, de manière à ce que le bord supérieur d'un pot vienne s'appliquer contre le bourrelet du pot immédiatement supérieur. Outre que ces collerettes ou bourrelets provoquent une perte de place, elles s'opposent pratiquement à une décoration de la surface totale de la paroi latérale du récipient, ce qui nuit à la présentation.

Un premier objet de la présente invention est de permettre la fabrication par thermoformage d'un récipient à fond embouti ne présentant aucun espace entre le fond et la paroi latérale.

Un second objet de la présente invention est la fabrication par thermoformage d'un pot ne présentant aucune collerette ou bourrelet d'empilage.

Selon la présente invention, le procédé de thermoformage d'un récipient, notamment à usage alimentaire, est caractérisé en ce que, après formation de la cavité principale, le fond est embouti par un dispositif d'emboutissage incluant une bague extensible. Ainsi, il est possible de fabriquer des pots avec fond à jupe à conicité inversée, en évitant les inconvénients dus au procédé d'injection.

Selon une autre caractéristique de la présente invention, la bague extensible est constituée par une paroi fendue régulièrement selon des génératrices, de manière à déterminer des barrettes, chacune des barrettes portant une came intérieure et une came extérieure espacées l'une de l'autre, et coopérant d'une part avec un fourreau extérieur et d'autre part avec un piston intérieur.

La bague extensible est constituée de préférence en acier à ressort, et présente une conicité du même ordre que la conicité du pot dans le cas d'une section circulaire.

D'autres caractéristiques et avantages de la présente invention apparaîtront au cours de la description qui va suivre d'un mode particulier de réalisation, donné uniquement à titre d'exemple non limitatif, en regard des dessins dans lesquels :

- la figure.1 représente en élévation un pot de yaourt et est constituée de deux demi-coupes, la demi-coupe gauche montrant un pot tel que fabriqué dans la technique antérieure, et la demi-coupe droite, un pot obtenu grâce au procédé selon l'invention ;

- la figure 2 est une vue en coupe verticale du dispositif d'emboutissage à bague extensible selon la présente invention ;

    - la figure 3 est une vue en coupe verticale partielle du dispositif d'emboutissage selon l'invention, le piston étant en position arrière ;

    - la figure 4 représente, dans les même conditions, le dispositif, lorsque le piston vient en position avant.

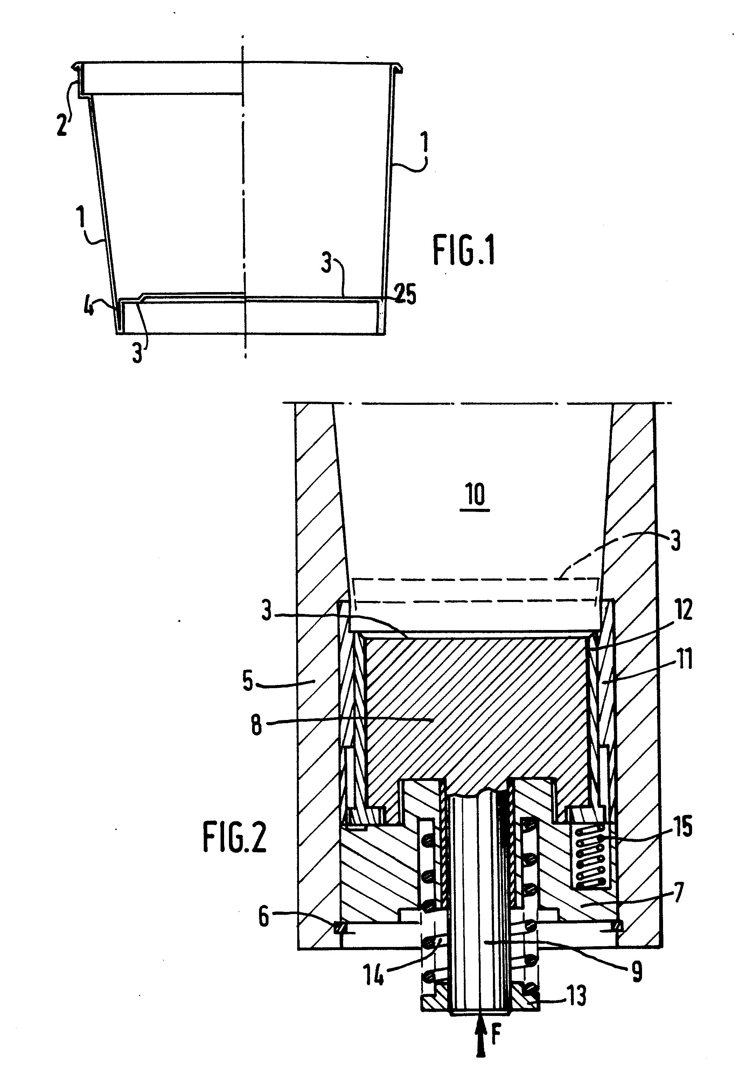

Sur la figure 1, on distingue sur la demi-coupe de gauche un récipient cylindrique, du type pot de yaourt, obtenu selon la technique de thermoformage antérieure. Ce pot comporte une paroi latérale 1 présentant à sa partie supérieure un bourrelet d'empilage 2 et à sa partie inférieure un fond embouti 3. Comme expliqué précédemment, il se forme, entre le fond 3 et la paroi latérale 1, un interstice 4 du fait que le piston de formation du fond 3 ne peut être que cylindrique. Dans cet interstice se trouve de l'air, dont il s'avère qu'il provoque l'oxydation du produit se trouvant dans le pot et le développement des bactéries.

Sur la demi-coupe droite de la figure est représenté un pot thermoformé selon l'invention. On voit que la paroi latérale 1 est continue et, par suite, peut être décorée sur toute sa hauteur. Le fond embouti 3 présente une contre-dépouille qui permet la soudure en 25 du fond contre la surface interne de la paroi 1.

Le pot qui a été représenté sur la figure 1 est un pot de forme générale tronconique, mais le procédé selon l'invention, peut s'appliquer également à des récipients de section quelconque, présentant sur leur hauteur une légère dépouille.

Un pot tel que celui représenté sur la figure 1 est obtenu à l'aide d'une machine de thermoformage classique. La seule modification à apporter à cette machine consiste dans l'utilisation, pour réaliser le fond, d'un dispositif d'emboutissage particulier.

Un tel dispositif est représenté sur la figure 2. Sur cette figure, à l'intérieur du moule 5, est monté, bloqué par un circlips 6, un palier 7. Dans ce palier est monté coulissante la tige 9 d'un piston 8. La tige 9 est animée d'un mouvement alternatif par une force mécanique ou pneumatique symbolisée par la flèche F, le rappel étant effectué par un ressort 14.

Sur la figure 2, le piston est représenté en position arrière, basse ou de retrait. Le pot 10 vient d'être embouti par le piston principal (non représenté) et a la configuration représenté sur la figure. Après emboutissage par le piston 8, le fond 3 occupera la position représentée en traits pointillés. Le palier 7 est entouré à sa partie avant ou supérieure par un fourreau 11. Entre le piston 8 et le fourreau 11 se trouve la bague extensible 12. Le but de cette bague est de venir presser la paroi latérale du fond 3 contre la paroi latérale du pot. A cet effet, son extrémité supérieure peut prendre une position expansée et une position repliée. A la partie arrière de la tige 9 est montée une collerette 13 sur laquelle prend appui le ressort hélicoïdal 14. Entre le palier 7 et la bague 12 sont interposés des ressorts 15 dont un seul apparaît sur la figure. Le ressort 14 a pour but de provoquer le retrait du piston dès que la pression exercée par la force F est supprimée. Les ressorts 15 ont pour but de pousser la bague extensible 12 vers le haut en équilibrant partiellement l'action du ressort 14.

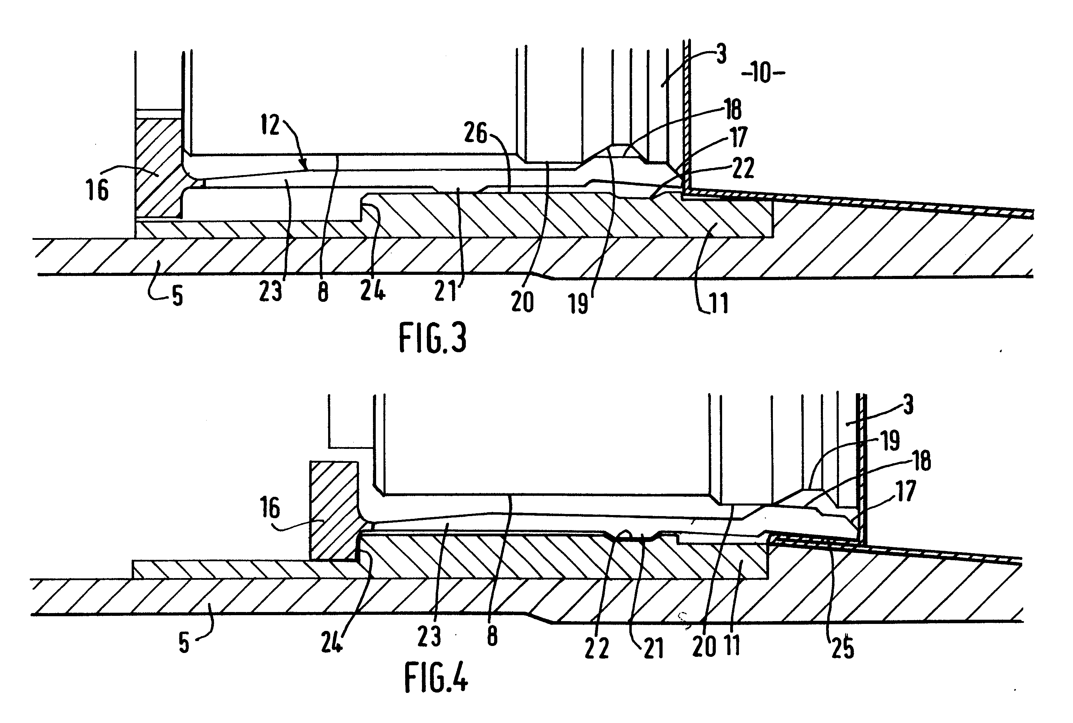

Sur les figures 3 et 4, la bague extensible 12 comprend un talon 7 et une tête 17. Elle est constituée d'une pluralité de lames de ressort 23, solidarisées à leur base et indépendantes à leur partie supérieure. Dans le cas d'un pot cylindrique, la bague extensible est constituée à partir d'un bloc cylindrique ou polygonal d'acier à ressort dans lequel on découpe, selon un pas déterminé et le long des génératrices du cylindre, des fentes de 2/10ème de millimètre, cette découpe étant avantageusement réalisée au laser.

Chacune des lames 23 présente du côté extérieur une came 21, et du côté intérieur une came 18. Le fourreau 11 reste fixe à l'intérieur du moule 5. Le piston 8 peut se déplacer par rapport au fourreau 11 et par rapport à la bague 12. Le fonctionnement est le suivant :

Dans la position représentée sur la figure 3, le piston 8 est en position basse ou arrière. Il présente à sa partie supérieure une rainure circonférentielle 19 dans laquelle sont insérées les cames 18 des barres 23. Le contact entre la came 21 et la surface inférieure du fourreau 11 maintient le cylindre 12 en position fermée. Lorsque le mouvement du piston vers la droite de la figure commence, le piston 8 entraîne, par la came 18, la bague extensible également vers la droite de la figure. Le fond du pot qui, encore à l'état pâteux, est alors replié à l'intérieur du récipient 10 par le mouvement du piston 8 et de la tête 17 des barres élastiques 23. Lorsque la came extérieure 21 de chacune des barres pénètre dans la rainure 22 formée à l'intérieur du fourreau 11, l'extrémité avant, constituée par les têtes 17 de ces barres, s'écarte naturellement de l'axe du récipient pour prendre la position représentée sur la figure 4. Le mouvement vers le haut ou vers l'avant du piston 16 est limité par une surface de butée 24 prévue à l'intérieur du fourreau. Par action de la came 19, la tête 17 est appliquée contre la surface 25 latérale du fond 3 et cette pression réalise une soudure par thermocompression entre la surface 25 et la paroi interne du récipient 10. L'interstice 4 qui existait dans les pots thermoformés est ainsi supprimé.

A partir de la position représentée sur la figure 4, lorsque le piston recule, il entraîne après un très bref délai, la descente de la came 18 à l'intérieur de la rainure 19, et la jupe ou bague extensible 12 est à nouveau solidarisée avec le piston. En effet, ce mouvement radial, vers le centre, de l'extrémité avant des barres 23, se traduit par le dégagement de la came 20 hors de la rainure 22. La came 21 porte à nouveau sur la surface interne 26 du fond 11, et les différentes pièces reprennent la position représentée sur la figure 3, pendant que le pot 10 est dégagé du moule 5 avant introduction d'une nouvelle feuille de matière thermoplastique chauffée.

Bien entendu, un dispositif tel que celui qui vient d'être décrit peut être utilisé quelle que soit la section du récipient. C'est toujours le mouvement d'extension vers l'extérieur de la tête 17 de chacune des barres qui contribue à appliquer en contre-dépouille la surface du bord 3 contre la surface interne de la paroi latérale du récipient.

Il va de soi que de nombreuses variantes peuvent être introduites notamment par substitution de moyens techniquement équivalents sans pour autant sortir du cadre de l'invention.

## Revendications

1. Dispositif de thermoformage d'un récipient à fond rentrant embouti, notamment à usage alimentaire, comprenant des moyens mécaniques et/ou pneumatiques pour former une cavité principale dans un moule (5), caractérisé en ce qu'il comprend une bague (12) radialement extensible constituée par une paroi cylindrique fendue selon des génératrices, de manière à former des lames (23) dont chacune porte une came intérieure (18) et une came extérieure (2), un piston (8) étant mobile à l'intérieur de la couronne (12).

2. Dispositif selon la revendication 1, caractérisé en ce qu'il comprend, à l'intérieur du moule (5), un fourreau (11) présentant une surface de butée (24) pour le talon de la bague (12), et une rainure (22) à l'intérieur de laquelle vient s'insérer la came (21), un piston (8) comprenant à sa partie supérieure une rainure (19) à l'intérieur de laquelle vient s'insérer la came (18).

3. Dispositif selon la revendication 2, caractérisé en ce que au moins un ressort (15) est interposé entre le support (7) de guidage du piston (18) et le talon (16) de la bague extensible (12).

4. Récipient obtenu selon le procédé de la revendication 1.

0259214

FIG.1

FIG.2

FIG.3

FIG.4

Office européen
des brevets

**RAPPORT DE RECHERCHE EUROPEENNE**

Numero de la demande

EP 87 40 1895

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 531 739 (BASTERT WERKE) * Page 5, colonne de gauche, ligne 57 – colonne de droite, ligne 13; figures * --- | 1-4 | B 29 C 51/34 |
| A | US-A-4 480 979 (D.G. KEITH et al.) * Colonne 6, ligne 41 – colonne 7, ligne 31; figures 4-9 * --- | 1-3 | |
| A | FR-A-1 394 411 (HOFFCO) --- | | |
| A | FR-A-2 454 891 (MONO CONTAINERS) --- | | |
| A | FR-A-1 289 844 (P. MAZOYER et al.) --- | | |
| A | US-A-4 117 062 (A.R. UHLIG) --- | | |
| A | GB-A-2 079 668 (ETIMEX KUNSTSTOFFWERKE) --- | | |
| A | US-A-3 949 046 (B. PROCTER) --- | | |
| A | FR-A-1 320 906 (J.G.H. OLLIER et al.) ----- | | |

DOMAINES TECHNIQUES RECHERCHES (Int. Cl.4)

B 29 C

Le présent rapport a été établi pour toutes les revendications

| Lieu de la recherche | Date d'achèvement de la recherche | Examinateur |
|---|---|---|
| LA HAYE | 01-12-1987 | SZAMOCKI G.J.A. |